# EUROPEAN PATENT APPLICATION

(11) **EP 2 538 203 A1**
(43) Date of publication of application: **26.12.2012**
(21) Application number: 12152954.9
(22) Date of filing: 27.01.2012
(51) Int. Cl.: G01N 21/88, G01N 21/95, G01M 3/38, G01N 21/958

(54) **Package inspection apparatus**

(30) Priority: 23.06.2011 JP 2011139132
(71) Applicant: System Square Inc., Nagaoka-shi Niigata 940-2127 (JP)
(72) Inventor: Ikeda, Noriaki, Nagaoka-shi, Niigata 940-2127 (JP); Hiroi, Isamu, Nagaoka-shi, Niigata 940-2127 (JP)
(74) Representative: Kensett, John Hinton

(57) **Abstract**

An inspection apparatus is provided for inspecting a package (30) having a content wrapped with a translucent packaging sheet, the package having an outline including front and rear edges (33, 34) and two side edges and having a seal where the packaging sheet is sealed formed inside at least one of the front and rear edges. The inspection apparatus includes a lighting (11) disposed on one side of a gap (4) across which the package is to be conveyed from an upstream conveyor mechanism (1) to a downstream conveyor mechanism (2), a camera (12) disposed on the other side of the gap, and an image processor for processing an image captured by the camera. The image processor is capable of obtaining a strip-shaped partial image including the seal from an entire image of the package, thereby enabling determination of whether a foreign substance is present in the partial image.

## Description

### BACKGROUND OF THE INVENTION

### 1. Field of the Invention

The present invention relates to an inspection apparatus for inspecting a package having a content wrapped with a translucent packaging sheet and particularly to a package inspection apparatus capable of determining whether a foreign substance is caught in a seal formed inside at least one of front and rear edges.

### 2. Description of the Related Art

In apparatuses for inspecting a package having a content such as food, typically, an image of the package is captured by a camera and processed to determine whether a foreign substance is present.

Japanese Unexamined Patent Application Publication No. 2009-162685 discloses a packaged food inspection apparatus having an irradiation part on one side of a conveyor for conveying a packaged food containing laver and a line sensor on the other side for capturing a near-infrared light transmission image that passes through the packaged food. Since the near-infrared light can pass through the contained laver, the presence of a foreign substance other than the laver can be detected by observing whether the number of pixels indicating opacity exceeds a predetermined number.

Japanese Unexamined Patent Application Publication No. 2004-245695 discloses a foreign substance detection apparatus having a transmissively illuminating means on one side of a gap between two conveyors and a line sensor on the other side. This detects the presence of a foreign substance such as human hair by calculating a density histogram of an image captured by the line sensor.

The inspection apparatuses disclosed in Japanese Unexamined Patent Application Publication Nos. 2009-162685 & 2004-245695 each detect the presence of a foreign substance by obtaining an entire image of a package containing food or the like. Accordingly, if a foreign substance is present in any part of the package, the package will be considered as defective one containing the foreign substance.

However, if you try to detect the presence of a foreign substance by obtaining an entire image of a package containing a food from which powdered pieces or small pieces can easily be separated or which can easily be disassembled in itself such as beika (dry Japanese confectionery made of rice) or wagashi (traditional Japanese confectionery), as with the inspection apparatuses disclosed in the foregoing Patent Documents, even if the powdered pieces or small pieces or the disassembled food is present in the package in a normal way, the package will be considered as defective one containing the foreign substance. This results in removal of packages having no problem with either appearance or food hygiene, extremely reducing yields.

On the other hand, the powdered pieces or small pieces or the disassembled food caught in a seal where a packaging sheet is joined together extremely deteriorates the appearance of the product and may also result in an incomplete seal of the package. Therefore, it is extremely important to detect the presence of a foreign substance with attention paid only to the seal. However, such an inspection apparatus capable of detecting the presence of a foreign substance with attention paid particularly to the seal has not existed heretofore.

### SUMMARY OF THE INVENTION

The present invention has been devised in consideration of the above-mentioned problem in the related art, and it is an object of the present invention to provide a package inspection apparatus capable of determining whether a foreign substance is present in a seal that is a limited part of a package.

The present invention provides an inspection apparatus for inspecting a package having a content wrapped with a translucent packaging sheet, the package having an outline including front and rear edges and two side edges and having a seal where the packaging sheet is sealed formed inside at least one of the front and rear edges,
the inspection apparatus comprising a lighting disposed on one side of a gap across which the package is to be conveyed from an upstream conveyor mechanism to a downstream conveyor mechanism, a camera disposed on the other side of the gap, and an image processor for processing an image captured by the camera,
the image processor being capable of obtaining a strip-shaped partial image including the seal from an entire image of the package, thereby enabling determination of whether a foreign substance is present in the partial image.

According to the package inspection apparatus of the present invention, whether a foreign substance is caught in a seal can be determined with attention paid only to the seal that is a part of a package. Accordingly, powdered pieces or small pieces of a food or a disassembled food present in the package in a normal way can be prevented from being erroneously determined as a foreign substance, thereby making it possible to detect only defective packages having a foreign substance in the seal.

In the present invention, the image processor may generate a mask image from a binary image obtained by binarization of the entire image of the package, and the partial image may be derived from a logical AND of the entire image of the package and the mask image.

For example, the image processor may generate the mask image with at least one of the front and rear edges of the binary image moved toward a center of the binary image by a distance corresponding to a width of the seal.

The image processor may also generate the mask image with at least one of the front and rear edges of the binary image expanded in a width direction of the package so as to reduce an effect of roughness of at least one of the front and rear edges.

The image processor may also generate the mask image with a part of the side edges of the binary image expanded in a length direction of the package so as to reduce an effect of inward curvature of the side edges.

The present invention may further comprise a position detector having a light emitting part and a light receiving part disposed on opposite sides of the gap between the upstream conveyor mechanism and the downstream conveyor mechanism, wherein
a light to be received by the camera and a detection light to be received by the light receiving part are directed to intersect with each other in the gap but have different wavelengths, and
when to capture an image with the camera depends on a signal generated by detection of the package with the position detector.

With the above-described structure, the gap between the upstream conveyor mechanism and the downstream conveyor mechanism can be exploited to detect the package being conveyed and also to capture an image having passed through the package, thereby improving the usability of the space. Moreover, since a detection area by the position detector and an imaging area exist in the same gap, the image can be captured with high precision timing.

In the present invention, moreover, the camera may be a line imaging camera having pixels aligned in a direction perpendicular to a conveying direction of the conveyor mechanism, and the entire image may be obtained by accumulating a plurality of line images each captured by the aligned pixels when the package being conveyed by the conveyor mechanism passes through an imaging area of the line imaging camera.

In the present invention, however, the line imaging camera may be replaced by an area imaging camera capable of capturing the entire image of the package.

Regarding the content of the package, the present invention is ideal for a food from which powdered pieces or small pieces can easily be separated such as beika or a food which can easily be disassembled within a package. However, foreign substances caught in the seal can be detected for any contents such as fabric products, fiber products and pharmaceutical products, without limitation to foods.

In the present invention, after the entire image is captured by passing a light through the package, only the strip-shaped partial image including the seal is taken out to determine whether a foreign substance is present. Accordingly, a part of the content dispersed in the package in a normal way can be prevented from being erroneously determined as a foreign substance, thereby making it possible to more than likely detect and remove only defective packages having a foreign substance in the seal.

### BRIEF DESCRIPTION OF THE DRAWINGS

Fig. 1 is a partial side view showing a package inspection apparatus according to one embodiment of the present invention;
Fig. 2 is a partial perspective view showing the package inspection apparatus;
Fig. 3 is a circuit block diagram of the package inspection apparatus;
Fig. 4 is an explanatory drawing showing an entire image obtained by a processing operation in an image processor;
Fig. 5 is an explanatory drawing showing a binary image obtained by binarization of the entire image shown in Fig. 4;
Fig. 6 is an explanatory drawing showing the entire image after an inclination angle θ is detected through the use of the binary image and the inclination angle is corrected;
Fig. 7 is an explanatory drawing showing the binary mage after the inclination angle is corrected;
Fig. 8 is an explanatory drawing showing an image obtained by longitudinally shortening the binary image shown in Fig. 7 by a distance S including a lateral seal;
Fig. 9 is an explanatory drawing showing image processing in which front and rear edges are expanded in a width direction to reduce an effect of roughness;
Fig. 10 is an explanatory drawing showing image processing in which right and left side edges are expanded in a length direction to reduce an effect of inward curvature;
Fig. 11 is an explanatory drawing showing a mask image;
Fig. 12 is an explanatory drawing showing a partial image including the lateral seal derived from a logical AND of the entire image and the mask image;
Fig. 13 is an explanatory drawing showing an image obtained by binarization of the partial image including the lateral seal; and
Fig. 14 is an explanatory drawing showing a modification of the present invention.

### DESCRIPTION OF THE PREFERRED EMBODIMENTS

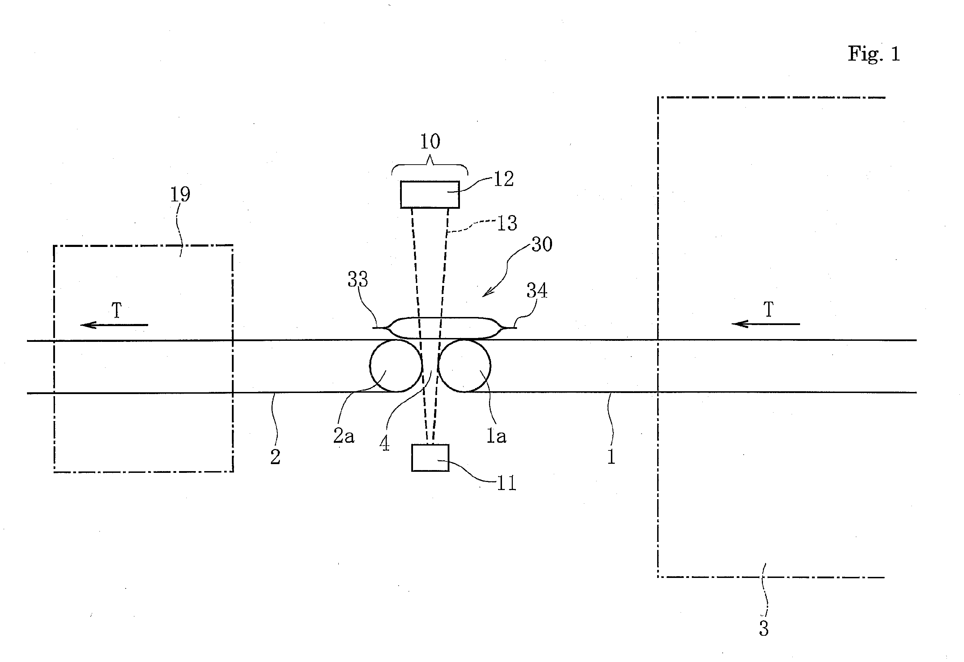

As shown in Fig. 1, a package 30 that is a work is conveyed from a conveyor 1 that is an upstream conveyor mechanism to a conveyor 2 that is a downstream conveyor mechanism. The upstream conveyor 1 passes through a metal detector 3. If a metallic foreign substance is present in the package 30, it can be detected by the metal detector 3 and removed from above the conveyor 1.

A roll 1a located at a downstream end of the conveyor 1 and a roll 2a located at an upstream end of the conveyor 2 are disposed a distance from each other in a conveying direction (T direction) to have a gap 4 at a connection between the conveyor 1 and the conveyor 2. The spatial size of the gap 4 is set such that the package 30 can be conveyed over it.

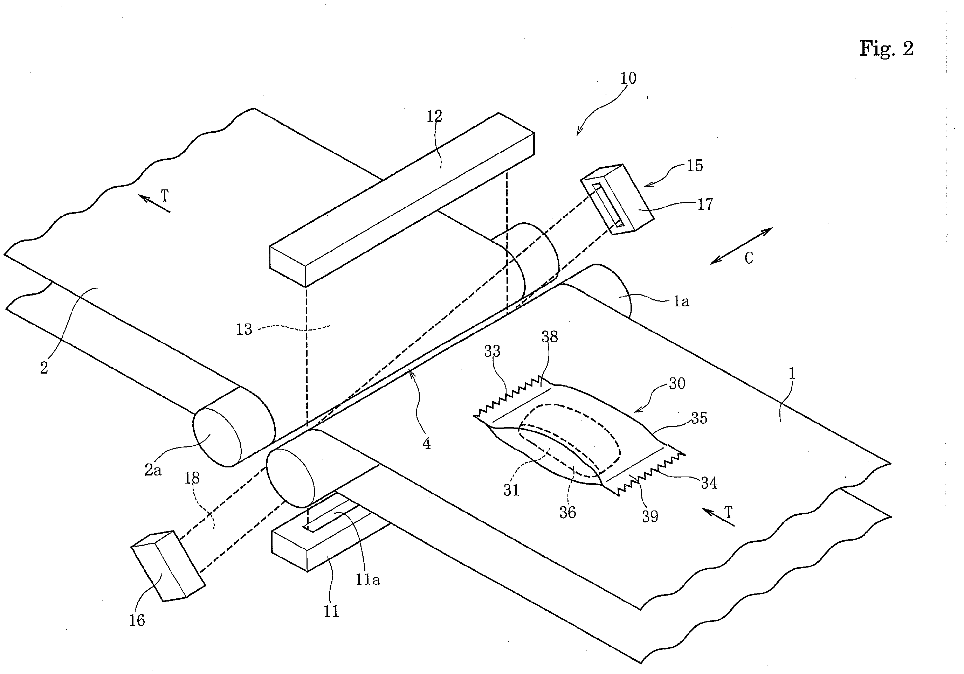

In a package inspection apparatus 10 according to one embodiment of the present invention, as shown in Figs. 1 and 2, a lighting 11 and a camera 12 are disposed in an opposed relation to each other with the former on one side of the package 30 passing through the gap 4 between the conveyor 1 and the conveyor 2 and the latter on the other side. The lighting 11 has a light emitting part 11a with a plurality of LEDs arranged in a single line or two or more lines extending in a crosswise direction (C direction) perpendicular to the conveying direction (T direction). As long as an illuminating light 13 having a uniform luminance in the crosswise direction (C direction) can be supplied to the gap 4 between the conveyor 1 and the conveyor 2, the lighting 11 can have any type of light source and any type of structure.

The camera 12 is a line imaging camera having image-capturing pixels of CCDs arranged in a single line or two or more lines extending in the crosswise direction (C direction). When the package 30 passes over the gap 4, a line image is captured by the aligned image-capturing pixels, and a plurality of such line images are accumulated during the passage of the package 30 beneath the camera to obtain an entire image of the package 30.

As shown in Fig. 2, the package inspection apparatus 10 also include a position sensor 15. The position sensor 15 has a light emitting part 16 and a light receiving part 17. A detection light 18 emitted from the light emitting part 16 is a laser beam. The detection light 18 has a given beam width in a direction perpendicular to a conveying plane of the conveyors 1 and 2 and passes through the gap 4 with an inclination angle vertically to the conveying plane. The light receiving part 17 has a light receiving element such as phototransistor, and the laser beam having a given beam width is concentrated with a lens and received by the light receiving element. Alternatively, the light receiving part 17 may have a plurality of light receiving elements aligned in a vertical direction.

The detection light 18 having a given beam width obliquely passes through the gap 4, increasing the possibility of detection of a front edge 33 of the package 30 being moved over the gap 4.

Although the illuminating light 13 and the detection light 18 intersect with each other in the gap 4 between the conveyers 1 and 2, since the illuminating lig t 13 is a LED light and the detection light 18 is a laser beam, they have different wavelengths and then a wavelength band that can be sensed by the image-capturing pixels of the camera12 is different from a wavelength band that can be sensed by the light receiving element of the light receiving part 17 of the position sensor 15. Therefore, even though the two lights intersect with each other, they never affect either the image captured by the camera 12 or the detection sensitivity of the package 30 by the position sensor 15.

As shown in Fig. 1, a removal apparatus 19 faces the downstream conveyor 2. If the presence of a foreign substance in a seal of the package 30 is detected by the package inspection apparatus 10, the package 30 inside the removal apparatus 19 can be removed from above the conveyor 2 by a removal force such as blast air.

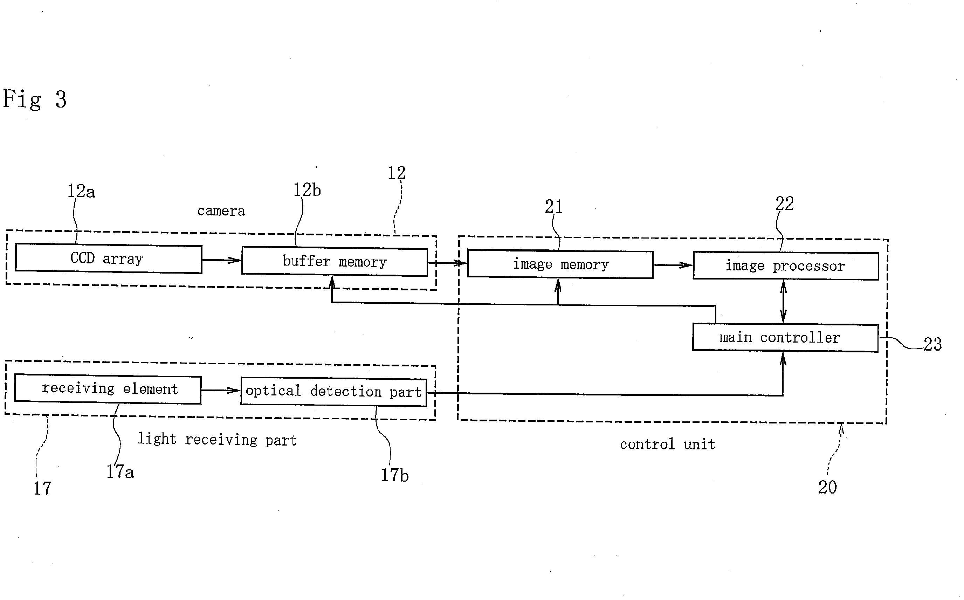

As shown in a circuit block diagram of Fig. 3, the camera 12 has a CCD array 12a having the aligned image-capturing pixels and a buffer memory 12b for temporarily holding a line image captured by the individual pixels of the CCD array 12a.

A control unit 20 has an image memory 21. Line images held by the buffer memory 12b of the camera 12 are sequentially sent to the image memory 21, and the line images are accumulated by the image memory 21 to obtain the entire image of the package 30, and then the entire image is sent to an image processor 22.

The light receiving part 17 of the position sensor 15 has a light receiving element 17a and an optical detection part 17b for generating a detection output when a light reception output of the light receiving element 17a exceeds a predetermined threshold, and the detection output is sent to a main controller 23 after A/D conversion.

The control unit 20 has the main controller 23. When receiving a detection signal generated by the detection of the front edge 33 of the package 30 from the optical detection part 17b, the main controller 23 gives the camera 12 an instruction to start the capture of the line image by the buffer memory 12b. The image memory 21 and the image processor 22 are also controlled by the main controller 23.

The light receiving part 17 of the position sensor 15 detects the detection light 18 passing through the gap 4, while the camera 12 captures the image with the illuminating light 13 passing through the same gap 4. Therefore, the capture of the line image by the buffer memory 12b of the camera 12 can be started in synchronization with the detection of the front edge 33 of the package 30 by the light receiving part 17, so that even when the package 30 is conveyed at a high speed, the entire image can be reliably captured.

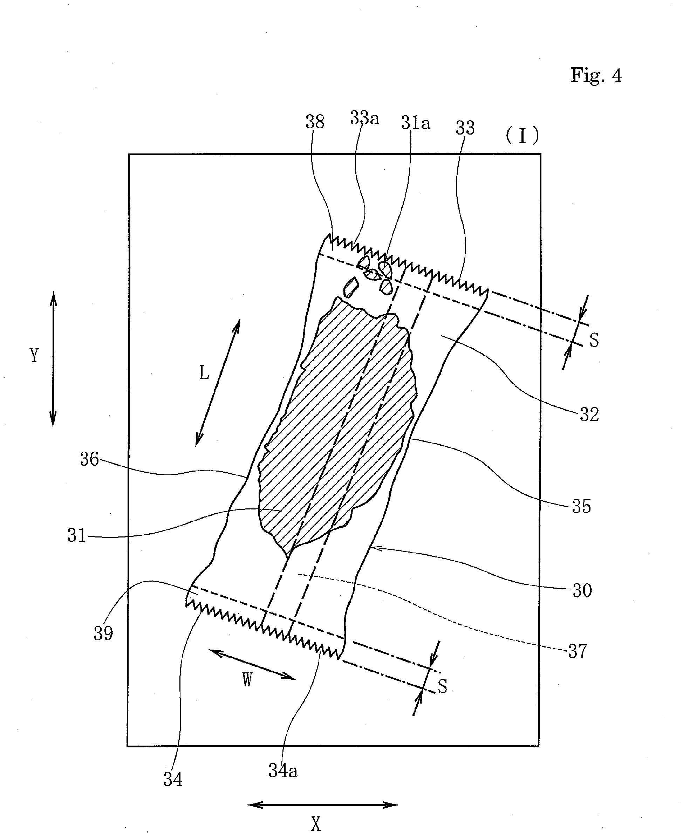

Fig. 4 shows an entire image (I) of the package 30 captured by the image memory 21 and transferred to the image processor 22.

The X direction of an image area shown in Fig. 4 corresponds to the crosswise direction (C direction) shown in Fig. 2, i.e., a length direction of each line image. The Y direction of the image area corresponds to the conveying direction (T direction) shown in Fig. 2, i.e., an accumulation direction of line images.

The package 30 has a content 31 wrapped with a packaging sheet 32. In this embodiment, the content 31 is a food, more particularly, "beika". The packaging sheet 32 is translucent. The term "translucent" as used herein means that light permeability is such that when the light passing through the package 30 is captured by the camera 12, a certain contrast can be obtained between an image of the packaging sheet 32 and an image of the content 31 because of a difference in brightness between the light passing through the packaging sheet 32 and the light blocked by the content 31.

The packaging sheet 32 may be a resin film, a paper material or a laminate material of a resin film and a paper material.

The package 30 appearing in the entire image (I) shown in Fig. 4 has a width direction (W direction) and a length direction (L direction). The outline of the package 30 has front and rear edges 33, 34 and right and left side edges 35, 36. The package 30 has a longitudinal seal 37 extending in the length direction (L direction) at the middle in the width direction (W direction). Inside the front edge 33, a lateral seal 38 extends in the width direction (W direction), while inside the rear edge 34, a lateral seal 39 extends in the width direction (W direction). At the longitudinal seal 37 and each of the lateral seals 38, 39, the packaging sheet 32 is welded by heat sealing or ultrasonic sealing or adhesive-sealed with an adhesive.

The length direction (L direction) of the package 30 is parallel to the longitudinal seal 37, while the width direction (W direction) is parallel to the lateral seals 38, 39.

In the package 30, the lateral seal 38 is formed within a strip-shaped area having a width that is a distance S as measured in the length direction with the front edge 33 taken as a base line, while the lateral seal 39 is formed within a strip-shaped area having a width that is a distance S as measured in the length direction with the rear edge 34 taken as a base line. In the entire image (I) shown in Fig. 4, a foreign substance 31a in the form of powdered pieces or small pieces as a part of the beika that is the content 31 is caught in the lateral seal 38 of the front edge 33.

The front edge 33 of the package 30 has a saw-toothed (jagged), finely rough part 33a, and the rear edge 34a also has a similar rough part 34a.

Since the packaging sheet 32 is sealed at the lateral seals 38, 39 after the content 31 is inserted into a tube formed by sealing the packaging sheet 32 at the longitudinal seal 37, the package 30 has inwardly curved parts at the right and left side edges 35, 36. That is, the package 30 has a relatively larger size in the width direction (W direction) at the front and rear edges 33, 34 but a relatively smaller size in the width direction (W direction) at the middle in the length direction (L direction).

Since the package 30 has passed through the metal detector 3 in the former stage, no metallic foreign substance is present in the package 30 at the inspection apparatus 10. In the case where the content 31 is the beika or the like, powdered pieces or small pieces separated from the beika can be present in the tubular package 30, which is however not a problem with the food hygiene and does not greatly deteriorate the appearance of the product. Rather, if the powdered pieces or small pieces in the package 30 are determined as a foreign substance, even normal packages can be removed undesirably.

On the other hand, if the powdered pieces or small pieces are caught in the lateral seal 38 as the foreign substance 31a, as shown in Fig. 4, they extremely deteriorate the appearance of the product and may also result in an incomplete seal of the lateral seal 38.

In the image processor 22, therefore, only the areas of the lateral seals 38, 39 are partly taken out from the entire image (I) of the package 30 to determine whether the foreign substance 31a is present in the areas.

How to inspect the package 30 will be described below.

In the entire image (I) shown in Fig. 4 obtained by the image processor 22, the background has the highest brightness, the area not having the content 31 inside the package 30, i.e., the area having only the packaging sheet 32 has the second highest brightness after the background, and the area having the content 31 or the foreign substance 31a has the lowest brightness because the illuminating light 13 is blocked.

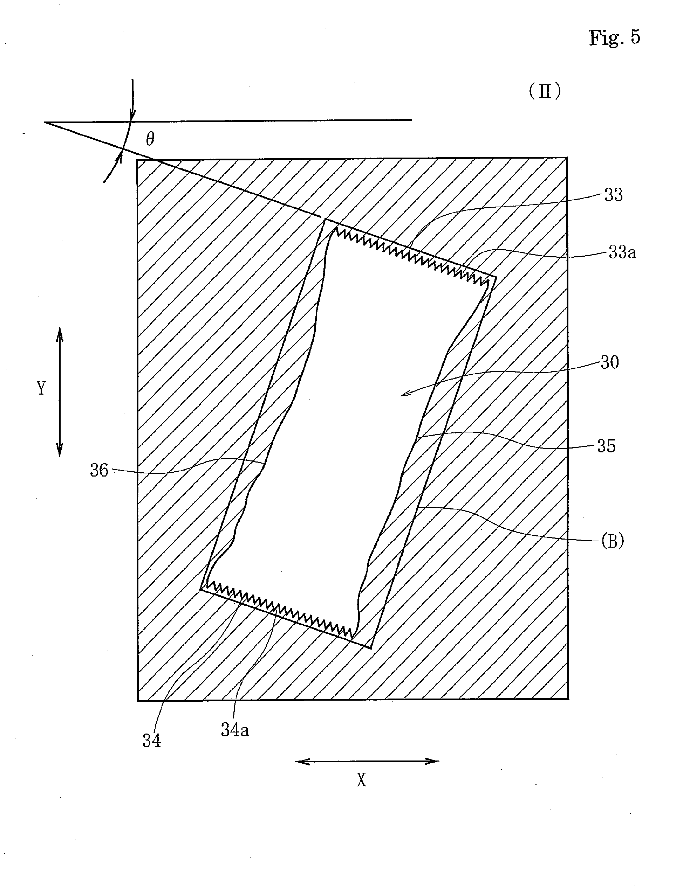

In the image processor 22, binarization of the entire image (I) is performed with a threshold set between the brightness of the background and the brightness of the area not having the content inside the package 30, i.e., the area having only the packaging sheet 32. Fig. 5 shows a binary image (II) after the binarization. The binary image (II) is obtained by the binarization such that the background is "0" and the whole package 30 is "1". In Figs. 5, 7, 8, 9, 10 and 11, as an example of the image processing, "0" of the background is expressed by "black", while "1" of the whole package 30 is expressed by "white". The color phase or tone of "0" and "1" depends on software run by the image processor 22.

The image processor 22 obtains a minimum rectangular frame (B) enclosing the outline of the package 30, which is the area of "1", from the binary image (II) shown in Fig. 5 and also obtains an inclination θ between the X direction and the rectangular frame (B).

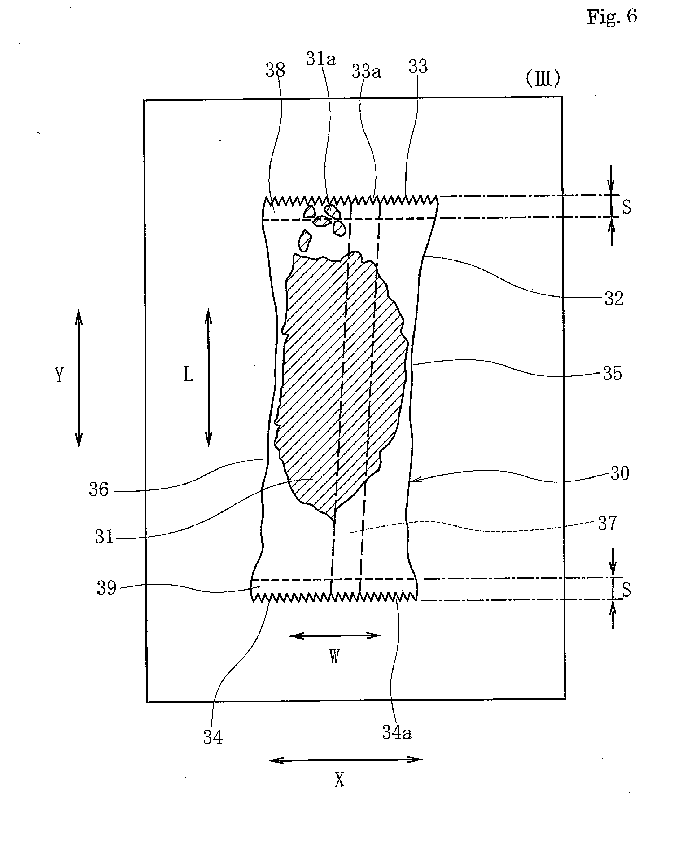

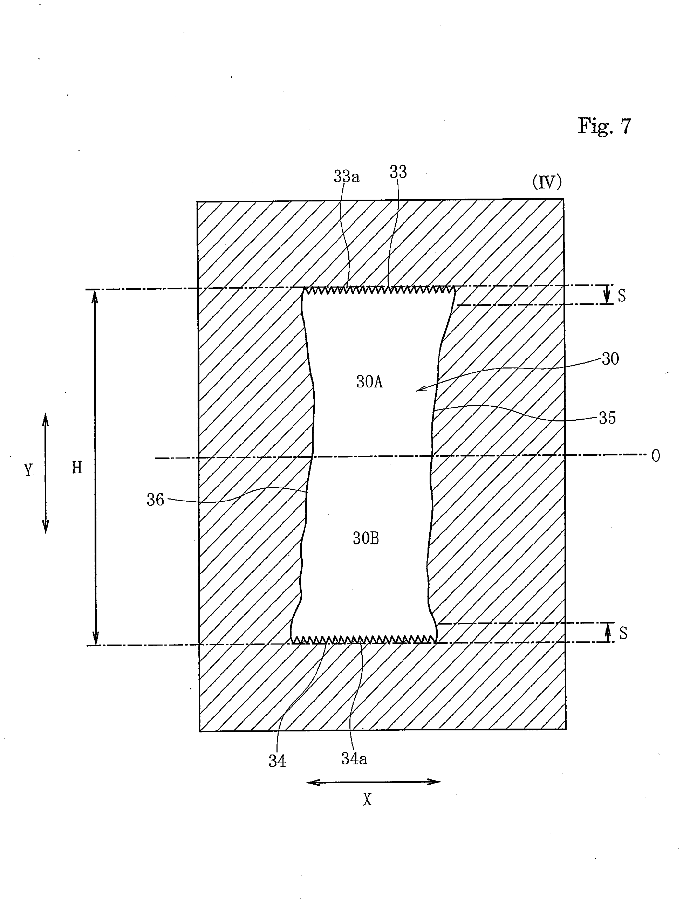

The entire image (I) before the binarization shown in Fig. 4 is corrected by the rotation through the inclination angle θ to obtain an entire image (III) after the correction of inclination shown in Fig. 6, while the binary image (II) shown in Fig. 5 is corrected by the rotation through the inclination angle θ to obtain a binary image (IV) after the correction of inclination shown in Fig. 7. In the images after the correction of inclination shown in Figs. 6 and 7, the width direction (W direction) of the package 30 is substantially parallel to the X direction, while the length direction (L direction) is substantially parallel to the Y direction.

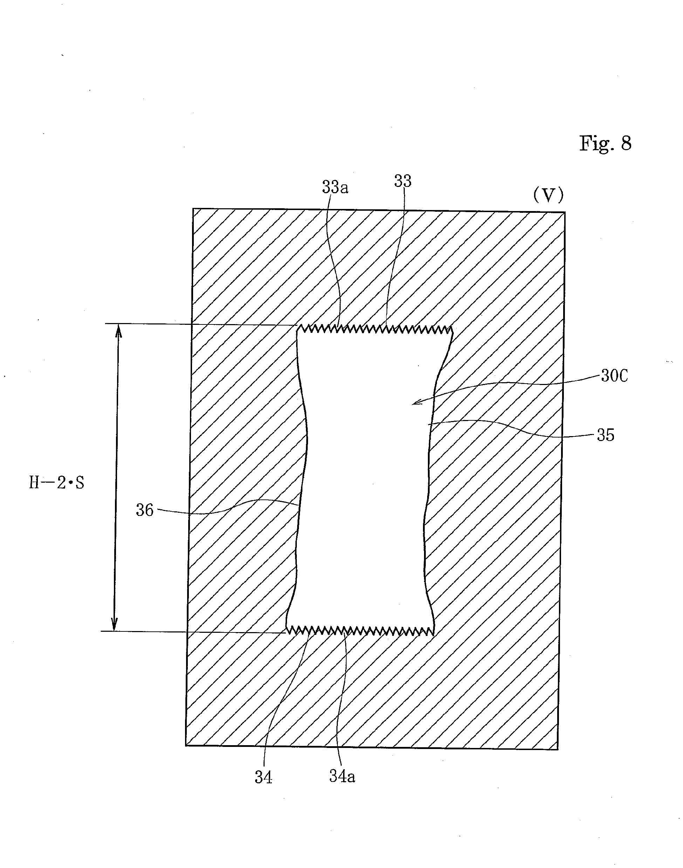

Then, the binary image (IV) after the correction of inclination shown in Fig. 7 is processed to move the front edge 33 of the package 30 by the distance S toward a centerline O and also move the rear edge 34 by the distance S toward the centerline O, thereby generating a longitudinally shortened binary image (V) shown in Fig. 8. In the binary image (IV) shown in Fig. 7, the outline of the package 30 has a length H, but in the longitudinally shortened image (V) shown in Fig. 8, the outline of a shortened package 30C has a length (H-2 · S).

Regarding the distance S, when the strip-shaped areas having the width S are set with the front and rear edge 33, 34 of the package 30 taken as a base line, the value S is predetermined such that the whole lateral seals 38, 39 can be enclosed in the areas. Preferably, the distance S is substantially the same as an actual width of the lateral seal as measured in the length direction (L direction).

In the actual image processing, the centerline O is set to bisect the outline of the package 30 in the binary image (IV) shown in Fig. 7 in the length direction (L direction), so that the image of the package 30 is divided along the centerline O into two half images 30A, 30B. Then, the half image 30B is inverted to "0", while the half image 30A, which is not changed from "1", is translated by the distance S downwardly in Fig. 7 to generate a translated half image. Moreover, the half image 30A is inverted to "0", while the half image 30B, which is not changed from "1", is translated by the distance S upwardly to generate another translated half image. By taking the logical OR of the two translated half images, there is obtained the longitudinally shortened binary image (V) with the outline of the package 30 shortened toward the centerline O by the distance S corresponding to the front and rear lateral seals 38, 39, as shown in Fig. 8.

By inverting "0" and "1" of the binarization in the longitudinally shortened image (V) shown in Fig. 8, there is obtained a mask image with the areas substantially corresponding to the lateral seals 38, 39 removed from the outline of the package 30. By taking the logicfl AND of the mask image and the entire image (III) after the correction of inclination shown in Fig. 6, then, there is obtained a partial image with only the strip-shaped areas having the distance S and enclosing the lateral seals 38, 39 separated from the entire image (III).

In the present embodiment, however, the following image processing is further performed in order to improve the accuracy of the shape of the mask image.

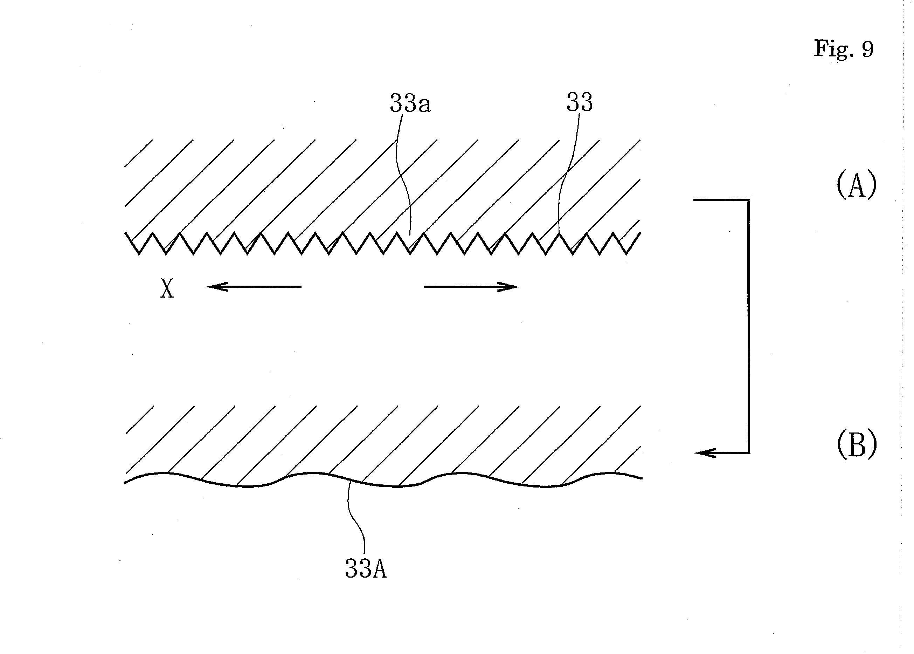

Fig. 9 shows an expansion process for reducing the effect of the rough parts 33a, 34a of the front and rear edges 33, 34 appearing in the mask image. In Fig. 9(A), only a part of the front edge 33 in the longitudinally shortened image (V) shown in Fig. 8 is taken out and expanded to both sides in the X direction to generate an expanded image 33A shown in Fig. 9(B). In the same way, a part of the rear edge 34 is expanded in the X direction to generate an expanded image 34A.

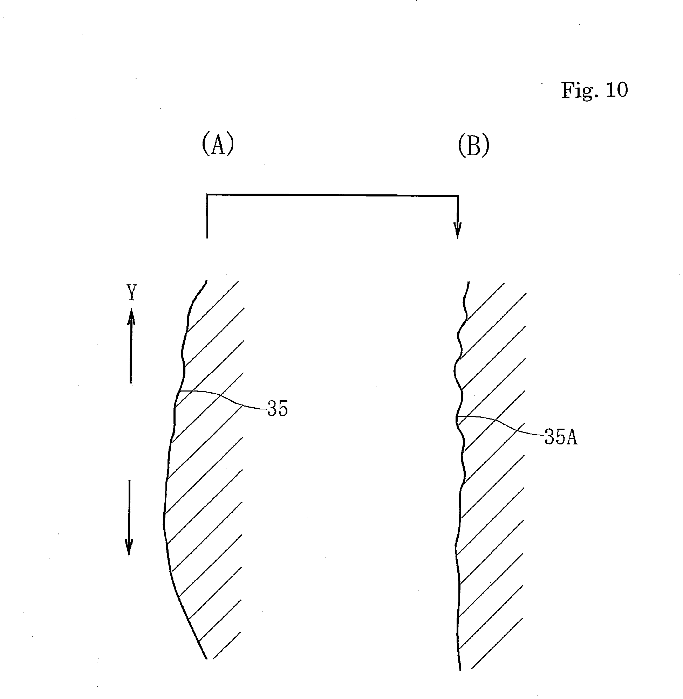

Fig. 10 shows an expansion process for reducing the effect of inward curvature of the right and left side edges 35, 36 appearing in the mask image. In Fig. 10(A), only a part of the side edge 35 is taken out from the outline of the package 30C in the longitudinally shortened image shown in Fig. 8 and expanded to both ends in the Y direction to generate an expanded image 35A shown in Fig. 10(B). In the same way, a part of the left side edge 36 is expanded in the Y direction to generate an expanded image 36A.

The expanded images 33A, 34A are stretched to the same length as the front and rear edges 33, 34 shown in Fig. 8, and the front and rear edges 33, 34 are replaced by the expanded images 33A, 34A. The expanded images 35A, 36A are stretched to the same length as the right and left side edges 35, 36 shown in Fig. 8, and the right and left side edges 35, 36 are replaced by the expanded images 35A, 36A.

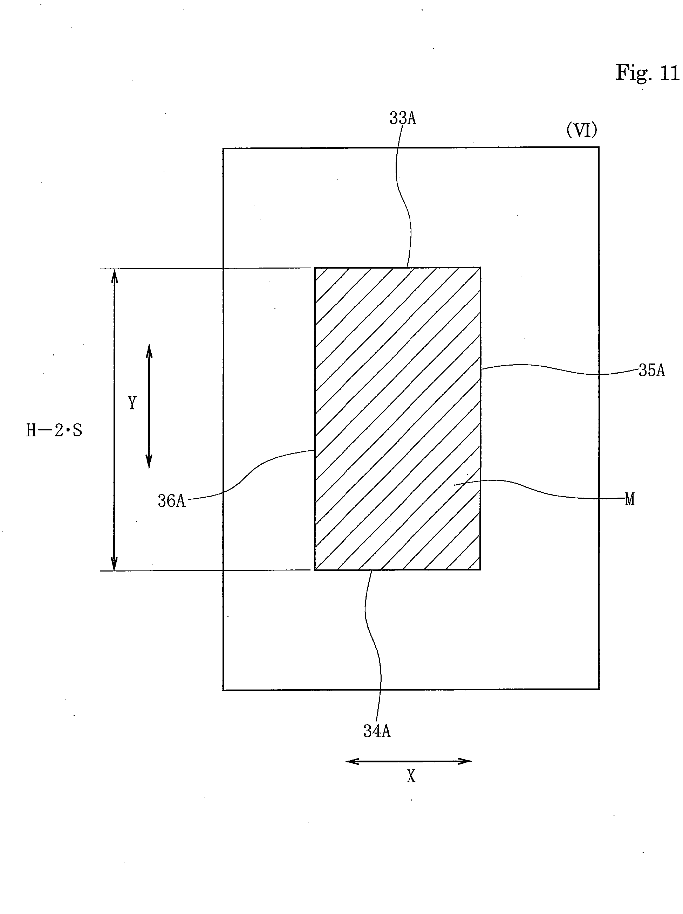

Then, "0" and "1" of the binarization are inverted to obtain a mask image (VI) shown in Fig. 11. The outline of a mask part M in the mask image (VI) has a length (H-2 · S) in the Y direction, wherein the front and rear edges are replaced by the expanded images 33A, 34A to eliminate the rough parts 33a, 34a, while the right and left side edges are replaced by the expanded images 35A, 36A to eliminate the right and left inwardly curved parts.

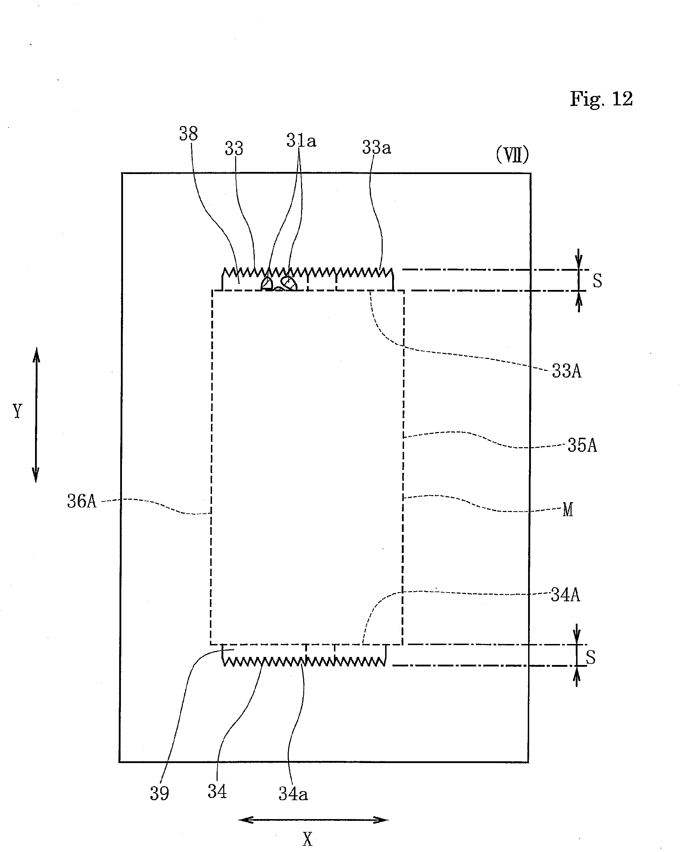

By taking the logical AND of the entire image (III) after the correction of inclination shown in Fig. 6 and the mask image (VI) shown in Fig. 11, only the front and rear areas having the width S can be taken out to obtain a partial image (VII), as shown in Fig. 12.

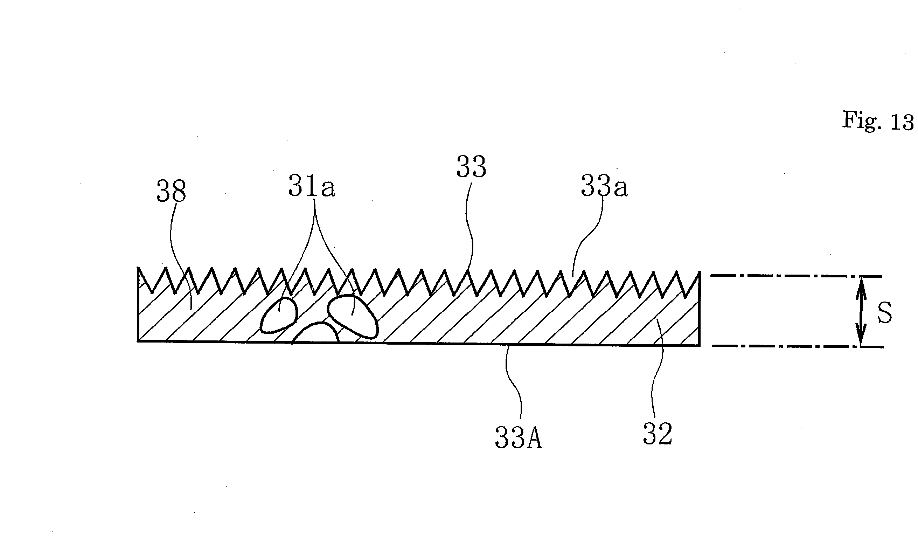

Then, regarding the image of the front strip-shaped area having the width S, as shown in Fig. 13, binarization of the strip-shaped area is performed with a threshold set between the brightness of the image of the packaging sheet 32 and the brightness of the image of the content 31. In this binary image, the foreign substance 31a generates "1" and the image of the foreign substance is expressed by "black", for example. If an area of "1", which is expressed by "black", for example, is present or the area of "1" is larger than an area having a given threshold (number of pixels), the image processor 22 determines that a foreign substance is present and caught in the lateral seal 38. Similarly, binarization of the rear strip-shaped area is performed to determine whether any foreign substance is caught in the lateral seal 39.

If the foreign substance caught in the lateral seal 38 or the lateral seal 39 is detected, the main controller 23 gives the removal apparatus 19 an instruction to remove the package 30 from above the conveyor 2.

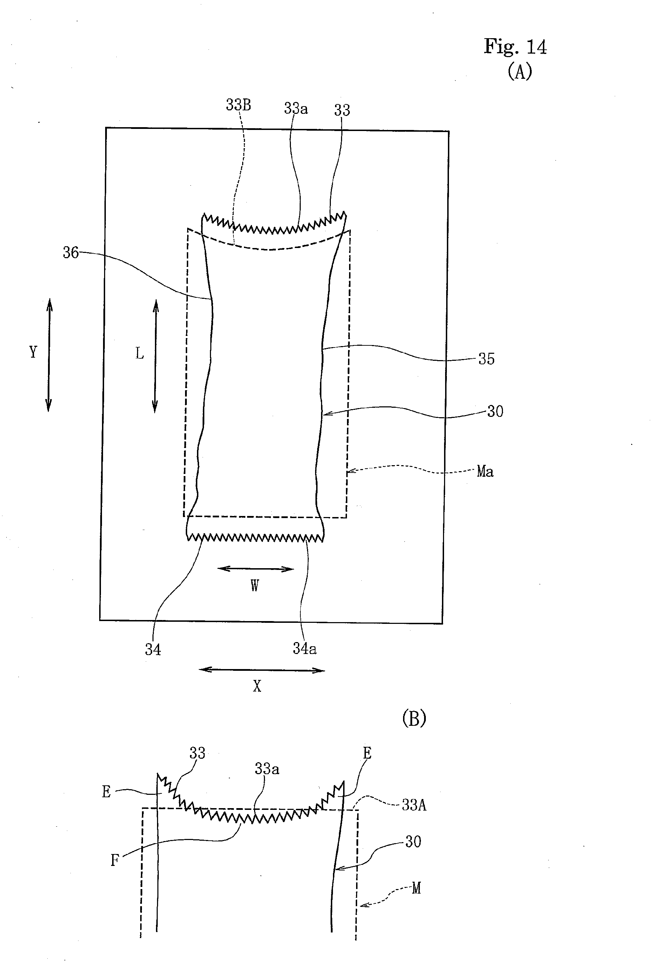

In an entire image shown in Fig. 14(A), the package 30 has an inwardly curved front edge 33a. This occurs such that the packaging sheet 32 is deformed after the front edge 33a of the package 30 is cut in the packaging process or the packaging sheet 32 is folded in the vicinity of the front edge 33a.

In this case, if the logical AND of the mask image (VI) having the same mask part M as shown in Fig. 11 and the entire image shown in Fig. 14(A) is taken as shown in Fig. 14(B), although the areas indicated by E can be taken out as a partial image, the central area indicated by F cannot be taken out and therefore the area F becomes a missing area in which the seal cannot be inspected.

According to the present embodiment thus far described, however, since a mask part Ma can be generated by moving the curved front edge 33a by the distance S toward the centerline O shown in Fig. 7, an inwardly curved strip-shaped partial image can be obtained by taking the logical AND of the mask part Ma and the entire image, which avoids the occurrence of such a missing area F as shown in Fig. 14(B).

When generating the mask image having the mask part Ma, moreover, the curved edge line can be laterally stretched while maintaining the curved shape to eliminate the saw-toothed rough part 33a and shortened to its original size after the elimination of the rough part so that the mask part Ma can have a curved front edge 33B not having the finely rough part 33a. A curved partial image can be obtained by using the mask part Ma having this front edge 33B.

While the present invention has been particularly shown and described with reference to embodiments thereof, it will be understood by those skilled in the art that various changes in form and detail may be made therein without departing from the spirit, scope and teaching of the invention.

## Claims

1. An inspection apparatus for inspecting a package having a content wrapped with a translucent packaging sheet, the package having an outline including front and rear edges and two side edges and having a seal where the packaging sheet is sealed formed inside at least one of the front and rear edges,
the inspection apparatus comprising lighting disposed on one side of a gap across which the package is to be conveyed from an upstream conveyor mechanism to a downstream conveyor mechanism, a camera disposed on the other side of the gap, and an image processor for processing an image captured by the camera,
the image processor being capable of obtaining a strip-shaped partial image including the seal from an entire image of the package, thereby enabling determination of whether a foreign substance is present in the partial image.

2. The package inspection apparatus of Claim 1, wherein the image processor generates a mask image from a binary image obtained by binarization of the entire image of the package, and the partial image is derived from a logical AND of the entire image of the package and the mask image.

3. The package inspection apparatus of Claim 2, wherein the image processor generates the mask image with at least one of the front and rear edges of the binary image moved toward a center of the binary image by a distance corresponding to a width of the seal.

4. The package inspection apparatus of Claim 2, wherein the image processor generates the mask image with at least one of the front and rear edges of the binary image expanded in a width direction of the package so as to reduce an effect of roughness of at least one of the front and rear edges.

5. The package inspection apparatus of Claim 2, wherein the image processor generates the mask image with a part of the side edges of the binary image expanded in a length direction of the package so as to reduce an effect of inward curvature of the side edges.

6. The package inspection apparatus of Claim 1, further comprising a position detector having a light emitting part and a light receiving part disposed on opposite sides of the gap between the upstream conveyor mechanism and the downstream conveyor mechanism, wherein
a light to be received by the camera and a detection light to be received by the light receiving part are directed to intersect with each other in the gap but have different wavelengths, and
when to capture an image with the camera depends on a signal generated by detection of the package with the position detector.

7. The package inspection apparatus of Claim 1, wherein the camera is a line imaging camera having pixels aligned in a direction perpendicular to a conveying direction of the conveyor mechanism, and the entire image is obtained by accumulating a plurality of line images each captured by the aligned pixels when the package being conveyed by the conveyor mechanism passes through an imaging area of the line imaging camera.
